# EUROPÄISCHE PATENTSCHRIFT

(11) **EP 3 574 044 B1**
(45) Veröffentlichungstag und Bekanntmachung des Hinweises auf die Patenterteilung: **09.03.2022**
(21) Anmeldenummer: 18740500.6
(22) Anmeldetag: 12.01.2018
(51) Int. Cl.: C08K 3/30, C08L 23/10, C08L 81/04, C08K 5/5357, C08K 5/14, C08K 3/24, C08K 3/16, C08K 5/3492, C08K 5/01, C08K 5/44, C08K 5/32

(54) **WIRKVERBESSERTE FLAMMSCHUTZZUSAMMENSETZUNGEN ENTHALTEND EIN PHOSPHONSÄUREDERIVAT**
FLAME-RETARDANT COMPOSITIONS WITH IMPROVED EFFECT, COMPRISING A PHOSPHONIC ACID DERIVATIVE
COMPOSITION IGNIFUGE À EFFET AMÉLIORÉ COMPRENANT UN DÉRIVÉ D'ACIDE PHOSPHONIQUE

(30) Priorität: 24.01.2017 EP 17000115
(43) Veröffentlichungstag der Anmeldung: 04.12.2019
(73) Patentinhaber: THOR GmbH, 67346 Speyer (DE)
(72) Erfinder: BUTZ, Volker, 67434 Neustadt / Weinstrasse (DE)
(86) Internationale Anmeldenummer: PCT/EP2018/000018
(87) Internationale Veröffentlichungsnummer: WO 2018/137883

(56) Entgegenhaltungen:
- EP-A1- 2 947 115
- JP-A- 2004 051 916
- US-A- 4 154 721
- US-A- 4 174 343
- US-A1- 2016 137 820

## Beschreibung

Die vorliegende Erfindung betrifft eine flammhemmende Zusammensetzung, die ein synergistisches Flammschutzmittelgemisch enthält. Ferner betrifft die Erfindung Polymere, die diese flammhemmende Zusammensetzung enthalten.

Polymere werden heutzutage häufig dadurch flammwidrig ausgerüstet, indem man diesen phosphorhaltige oder halogenhaltige Verbindungen, oder Gemische davon, zusetzt. Auch Gemische von phosphor- und stickstoffhaltigen Verbindungen werden derzeit oft als Flammhemmer verwendet. Ein hiermit einhergehendes Problem ist zumeist ein zu schwacher Flammschutzeffekt, oder eine zu geringe thermische Stabilität des resultierenden ausgerüsteten Kunststoffes.

Weiterhin haben sich Salze von Phosphinsäuren als wirksame flammhemmende Zusätze für Polymere erwiesen, hierbei werden sowohl Alkalimetallsalze (DE-A 2 252 258) als auch Salze anderer Metalle (DE-A 2 447 727) verwendet. Diese flammhemmenden Zusätze führen zu einer geringen Veränderung der thermischen Eigenschaften des Kunststoffes, weisen jedoch noch immer eine zu geringe flammhemmende Wirkung auf.

Eine Druckschrift, die sich mit der Verwendung von Diphosphonaten als flammhemmende Verbindungen beschäftigt, ist die US 4,174,343. In diesem Dokument wird eine Vielzahl von Diphosphonaten offenbart, die in unterschiedlichen Polymeren und Copolymeren flammhemmende Eigenschaften haben sollen.

Die U.S. Patentschrift US 4,154,721 offenbart flammhemmende Zusammensetzungen, die ein Pentaerythrit-Diphosphonat, bevorzugt das Dimethylpentaerythrit-Diphosphonat, und eine halogenierte organische Verbindung enthalten. Insbesondere offenbart dieses Dokument Polymerzusammensetzungen, die aufgrund der Anwesenheit bestimmter Phosphonatverbindungen einen erhöhten Flammschutzgrad aufweisen. Ferner werden in jüngster Zeit auch synergistische Kombinationen von Phosphonaten mit gehinderten Aminen als synergistisch wechselwirkende flammhemmende Zusammensetzungen eingesetzt. So offenbart beispielsweise die WO2010/026230 synergistische Mischungen von Phosphonatvervbindungen mit 1,3,5-Triazinverbindungen, ausgewählt aus Tris-2-hydroxyethylisocyanurat, Poly-[2,4-(piperazin-1,4-yl)-6-(morpholin-4-yl)-1,3,5-triazin], Dimelaminphosphat, Melaminpyrophosphat, und gehinderten Aminverbindungen.

Im Lichte des Standes der Technik besteht die der Erfindung zugrundeliegende Aufgabe darin, eine weitere hoch wirksame flammhemmende Zusammensetzung zur Verfügung zu stellen. Die einzelnen Komponenten der erfindungsgemäßen flammhemmenden Zusammensetzung sollen dabei synergistisch zusammenwirken, und deshalb beim gleichzeitigen Einsatz in geringeren Konzentrationen verwendet werden können, verglichen mit den nötigen Konzentrationen im Falle der Einzelkomponenten.

Diese Aufgabe löst die Erfindung durch ein Gemisch bzw. durch eine flammhemmende Zusammensetzung, enthaltend eine Mischung der Komponenten (A) und (B) mit den nachfolgenden Bedeutungen:
(A) ist wenigstens eine Phosphonatverbindung gemäß der allgemeinen Formel 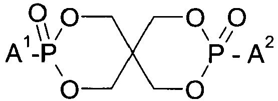 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, darstellen,
(B) ist wenigstens eine Verbindung oder ein Gemisch von zwei oder mehreren Verbindungen, ausgewählt aus der Gruppe bestehend aus Zinksulfid, Polyphenylensulfid, Zinkhydroxystannat und Zinkstannat, und
(C) ist wenigstens eine Verbindung oder ein Gemisch von zwei oder mehreren Verbindungen, ausgewählt aus der Gruppe bestehend aus:
   (c1) Dicumyl(2,3-Dimethyl-2,3-diphenylbutan), Dicumylperoxid und Polycumyl-1,4, Polycumyl-1,3,
   (c2) einer NOR-HALS-Verbindung,
   (c3) einer organischen Oxyimind-Verbindung, und
   (c4) einem Sulfenamid.

Die erfindungsgemäße Zusammensetzung bzw. das Gemisch kann dabei selbst bereits eine flammhemmende Zusammensetzung sein, oder in Kombination mit weiteren, nachfolgend genannten Bestandteilen, eine flammhemmende Zusammensetzung bilden.

Im Rahmen der vorliegenden Erfindung hat es sich dabei herausgestellt, dass durch ein synergistisches Zusammenwirken der Komponenten (A), (B) und (C) die erforderlichen Einsatzmengen der Komponenten deutlich herabgesetzt werden können. Die synergistische Wirkung der erfindungsgemäßen flammhemmenden Zusammensetzung geht dabei deutlich über die üblicherweise beobachtete additive Wirkung der Einzelkomponenten (A), (B) und (C) hinaus. So zeigte sich überraschenderweise, dass durch den gleichzeitigen Einsatz der Komponenten (A), (B) und (C) als flammhemmende Komponenten, diese zur flammhemmenden Ausrüstung von Kunststoffen in wesentlich geringeren Mengen eingesetzt werden können, als bei additiver Wirkung.

Gemäß einer allgemeinen Ausführungsform der Erfindung ist die eine, oder sind die mehreren Phosphonatverbindung(en) der Komponente (A) eine oder mehrere Phosphonatverbindung(en) der Formel 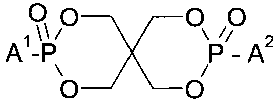 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl darstellen. Die geradkettige oder verzweigte Alkylgruppe mit 1 bis 4 Kohlenstoffatomen ist dabei zum Beispiel Methyl, Ethyl, i-Propyl, n- Propyl, n-Butyl, sek-Butyl und tert.-Butyl. Gemäß einer Ausführungsform der Erfindung kann die Alkylgruppe eine Haloalkylgruppe sein, die mit einem, zwei oder drei Halogenatomen, ausgewählt aus Chlor und Brom, substituiert ist. Ferner kann diese eine Phenyl oder durch Halogen substituierte Phenylgruppe, wie 4-Chlorphenyl, 2,4-Dichlorphenyl, 2,4,6-Trichlorphenyl, 4-Bromphenyl, 2,4-Dibromphenyl oder 2,4,6-Tribromphenyl sein. Weiterhin können A¹ und A² unabhängig voneinander Phenylalkyl mit 7 bis 9 Kohlenstoffatomen, oder Phenylalkenyl mit 8 bis 10 Kohlenstoffatomen, das im Alkylrest substituiert sein kann, bedeuten. Weitere Phosphonatverbindungen der vorstehenden Formel werden in dem US Patent US 4,174,343 und in der DE 26 30 693 offenbart, welche durch Bezugnahme in die Offenbarung der vorliegenden Erfindung eingeschlossen sind.

Gemäß einer weiteren bevorzugten Ausführungsform der Erfindung ist die in der flammhemmenden Zusammensetzung enthaltene Phosphonatverbindung (A), eine Verbindung der nachfolgenden Strukturformel 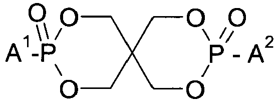 worin A¹ und A² unabhängig voneinander Alkyl mit 1 bis 4 Kohlenstoffatomen, bevorzugt eine Methylgruppe, eine Ethylgruppe und/oder eine Propylgruppe, besonders bevorzugt Alkyl mit 1 bis 2 Kohlenstoffatomen und am meisten bevorzugt eine Methylgruppe ist.

Gemäß einer besonders bevorzugten Ausführungsform der Erfindung handelt es sich bei der Phosphonatverbindung um das Dimethylspirophosphonat, bei dem die Substituenten A¹ und A² der vorstehend gezeigten Formel Methylgruppen sind. Diese Verbindung entspricht der nachfolgend dargestellten Formel:

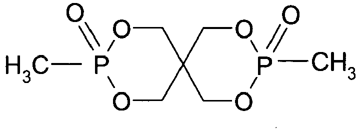

Diese Verbindung, bekannt unter den Bezeichnungen 2,4,8,10-Tetraoxa-3,9-diphosphaspiro [5.5] undecan-3,9-dimethyl-3,9dioxid, 3,9-Dimethyl-2,4,8,10-tetraoxa-3,9-diphosphaspiro [5.5]undecan-3,9-dioxid mit der CAS Nummer 3001-98-7 ist erhältlich bei der THOR GmbH, Speyer, Deutschland, unter den Markennamen AFLAMMIT PCO 900.

Gemäß einer allgemeinen Ausführungsform der Erfindung ist die eine, oder sind die mehreren Verbindung(en) der Komponente (B), ausgewählt aus der Gruppe bestehend aus Zinksulfid, Polyphenylensulfid, Zinkhydroxystannat und Zinkstannat.

Gemäß einer bevorzugten Ausführungsform der Erfindung handelt es sich bei der Komponente (B) um Zinksulfid, ZnS.

Gemäß einer weiteren bevorzugten Ausführungsform der Erfindung handelt es sich bei der Komponente (B) um Zinkhydroxystannat und/oder Zinkstannat.

Gemäß einer weiteren bevorzugten Ausführungsform der Erfindung handelt es sich bei der Komponente (B) um Polyphenylensulfid (PPS). Polyphenylensulfid ist ein hochtemperaturbeständiger thermoplastischer Kunststoff gemäß der allgemeinen Formel (SC₆H₄)ₙ:

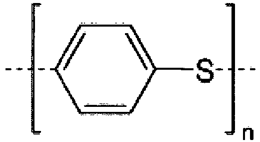

Polyphenylensulfid ist ein teilkristalliner Hochleistungskunststoff, der durch die Verbindung aromatischer Monomereinheiten über Schwefelatome besonders widerstandsfähige Polymere ergibt. Das Polyphenylensulfid kann linear und vernetzt sein. Im zweiten Fall sind die verzweigten Polymerketten reversibel über physikalische Vernetzungspunkte miteinander verbunden, im ersten Fall lagern sich die Ketten der gering verzweigten linearen Polyphenylensulfide zu hochgeordneten Überstrukturen aneinander. Gemäß einer bevorzugten Ausführungsform handelt es sich bei dem Polyphenylensulfid um ein Polymer mit einem zahlenmittleren Molgewicht Mn von etwa 10.000.

Die erfindungsgemäße Zusammensetzung ist allgemein dadurch gekennzeichnet, dass sie die Komponente (A) in einer Menge im Bereich von 50 bis 90 Gew.-%, bevorzugt in einer Menge im Bereich von 70 bis 80 Gew.-%, bezogen auf die Zusammensetzung, enthält.

Die erfindungsgemäße Zusammensetzung ist allgemein dadurch gekennzeichnet, dass sie die Komponente (B) in einer Menge im Bereich von 10 bis 50 Gew.-%, bevorzugt in einer Menge im Bereich von 20 bis 30 Gew.-%, bezogen auf die Zusammensetzung, enthält.

Das Verhältnis (Gewichtsteile) der Verbindung(en) (A) zu der Verbindung bzw. den Verbindungen (B) ist so gewählt, dass ein Synergismus hinsichtlich der Flammschutzwirkung der beiden Komponenten vorliegt. Das Verhältnis in der Zusammensetzung liegt dabei zum Beispiel zwischen 20:1 bis 1:2, bevorzugt im Bereich von 15:1 bis 1:1, ganz besonders bevorzugt im Bereich von 9:1 bis 1:1. Die verwendete Menge an Komponente (A) und Komponente (B) hängt dabei auch von der Wirksamkeit der speziellen Verbindung(en) und dem speziellen Anwendungsgebiet ab.

Die erfindungsgemäße Flammschutzmittelzusammensetzung ist allgemein dadurch gekennzeichnet, dass sie die Komponenten (A) und (B) in einer Gesamtmenge im Bereich von 1 bis 100 Gew.-%, bevorzugt im Bereich von 30 bis 100 Gew.-%, bezogen auf die Summe aller Komponenten der Flammschutzmittelzusammensetzung, enthält. Gemäß einer weiteren Ausführungsform besteht die erfindungsgemäße Flammschutzmittelzusammensetzung zu 100 Gew.-% aus den Komponenten (A) und (B).

Gemäß der Erfindung umfasst die vorstehend definierte Zusammensetzung als weitere Komponente, Komponente (C), eine oder mehrere Komponente(n), die mit den Komponenten (A) und (B) nochmals wirkverstärkend zusammenwirkt(en).

Die Komponente (C) ist eine Verbindung oder ein Gemisch von zwei oder mehreren Verbindungen ausgewählt aus der Gruppe bestehend aus:
(c1) Dicumyl(2,3-Dimethyl-2,3-diphenylbutan), Dicumylperoxid und Polycumyl-1,4, Polycumyl-1,3,
(c2) einer NOR-HALS-Verbindung,
(c3) einer organischen Oxyimind-Verbindung, und
(c4) einem Sulfenamid.

Gemäß einer bevorzugten Ausführungsform der Erfindung handelt es sich bei der Komponente (C) um eine oder mehrere Verbindung(en), ausgewählt aus der Gruppe (c1), bestehend aus Dicumyl(2,3-Dimethyl-2,3-diphenylbutan), Dicumylperoxid und Polycumyl-1,4, Polycumyl-1,3. Gemäß einer besonders bevorzugten Ausführungsform der Erfindung handelt es sich bei der Komponente (c1) um Dicumyl(2,3-Dimethyl-2,3-diphenylbutan).

Die Erfindung betrifft somit gemäß dieser bevorzugten Ausführungsform eine flammhemmende Zusammensetzung, enthaltend eine Mischung der Komponenten (A), (B) und (C) mit den nachfolgenden Bedeutungen:
(A) ist wenigstens eine Phosphonatverbindung gemäß der allgemeinen Formel 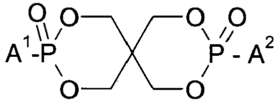 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, darstellen,
(B) ist wenigstens eine Verbindung oder ein Gemisch von zwei oder mehreren Verbindungen, ausgewählt aus der Gruppe bestehend aus Zinksulfid, Polyphenylensulfid, Zinkhydroxystannat und Zinkstannat und
   (c1) ist eine oder mehrere Verbindung(en), ausgewählt aus der Gruppe bestehend aus Dicumyl(2,3-Dimethyl-2,3-diphenylbutan), Dicumylperoxid und Polycumyl-1,4, Polycumyl-1,3.

Im Rahmen der vorliegenden Erfindung hat es sich herausgestellt, dass durch die Anwesenheit dieser weiteren Komponente (c1) die Wirksamkeit der erfindungsgemäßen Zusammensetzung, enthaltend die Komponenten (A) und (B), noch weiter in überraschendem Maße verbessert wird, so dass die erforderlichen Einsatzmengen der Komponenten (A), (B) und (c1) noch weiter herabgesetzt werden können.

Gemäß einer weiteren bevorzugten Ausführungsform der Erfindung handelt es sich bei der Komponente (C) um eine oder mehrere Verbindung(en), ausgewählt aus der Gruppe (c2) bestehend aus NOR-HALS-Verbindungen. Bei den NOR-HALS-Verbindungen handelt es sich allgemein um Verbindungen gemäß der nachfolgend abgebildeten allgemeinen Formel: 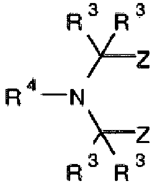 wobei:
R³ für Wasserstoff oder einen gegebenenfalls substituierter Alkyl-, Cycloalkyl-, Aryl-, Heteroaryl- oder Acyl-Rest steht, bevorzugt ein C₁ bis C₄-Alkylrest ist,
R⁴ für einen Alkoxy-, Aryloxy-, Cycloalkoxy-, Aralkoxy- oder Acyloxy-Rest steht, und
Z für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können, der gegebenenfalls durch Ester-, Ether-, Amin, Amid, Carboxy- oder Urethangruppen substituiert sein kann.

Die Erfindung betrifft somit gemäß dieser bevorzugten Ausführungsform eine flammhemmende Zusammensetzung, enthaltend eine Mischung der Komponenten (A), (B) und (C) mit den nachfolgenden Bedeutungen:
(A) ist wenigstens eine Phosphonatverbindung gemäß der allgemeinen Formel 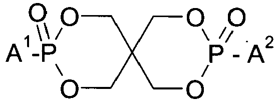 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, darstellen,
(B) ist wenigstens eine Verbindung oder ein Gemisch von zwei oder mehreren Verbindungen, ausgewählt aus der Gruppe bestehend aus Zinksulfid, Polyphenylensulfid, Zinkhydroxystannat und Zinkstannat und
   (c2) ist wenigstens eine NOR-HALS-Verbindung.

Typische Beispiele für die genannten NOR-HALS-Verbindungen: 1-Cyclohexyloxy-2,2,6,6-Tetramethyl-4-Octadecylaminopiperidin; Bis(1-Octyloxy-2,2,6,6-Tetramethylpiperidin-4-yl) Sebacat; 2,4-Bis[(1-Cyclohexyloxy-2,2,6,6-Tetramethylpiperidin-4-yl)Butylamino]-6-(2-Hydroxyethylamino-S-Triazin; Bis(1-Cyclohexyloxy-2,2,6,6-Tetramethylpiperidin-4-yl) Adipat; 2,4-Bis[(1-Cyclohexyloxy-2,2,6,6-Tetramethylpiperidin-4-yl)Butylamino]-6-Chloro-S-Triazin; 1-(2-Hydroxy-2-Methylpropoxy)-4-Hydroxy-2,2,6,6-Tetramethylpiperidin; 1-(2-Hydroxy-2-Methylpropoxy)-4-Oxo-2,2,6,6-Tetramethylpiperidin; 1-(2-Hydroxy-2-Methylpropoxy)-4-Octadecanoyloxy-2,2,6,6-Tetramethylpiperidin; Bis(1-(2-Hydroxy-2-Methylpropoxy)-2,2,6,6-Tetramethylpiperidin-4-yl) Sebacat; Bis(1-(2-Hydroxy-2-Methylpropoxy)-2,2,6,6-Tetramethylpiperidin-4-yl) Adipat; 2,4-Bis{N-[1-(2-Hydroxy-2-Methylpropoxy)-2,2,6,6-Tetramethylpiperidin-4-yl]-N-Butylamino}-6-(2-Hydroxyethylamino)-S-Triazin); 4-Piperidinol, 2,2,6,6-Tetramethyl-1-(undecyloxy)-4,4'-carbonat; das Reaktionsprodukt von 2,4-Bis[(1-Cyclohexyloxy-2,2,6,6-Tetramethylpiperidin-4-yl)Butylamino]-6-Chloro-S-Triazin mit N,N'-Bis(3-Aminopropylethylendiamin); die Oligomer-Verbindung, welche das Kondensationsprodukt ist von 4,4'-Hexamethylen-Bis(Amino-2,2,6,6-Tetramethylpiperidin) und 2,4-Dichloro-6-[(1-Cyclohexyloxy-2,2,6,6-Tetramethyl-4-yl)Butylamino]-S-Triazin, an den Enden verschlossen mit 2-Chloro-4,6-Bis(Dibutylamino)-S-Triazin.

Gemäß einer besonders bevorzugten Ausführungsform der Erfindung handelt es sich bei der Komponente (c2) um eine NOR-HALS-Verbindung, ausgedrückt durch die folgende allgemeine Formel:

R¹NHCH₂CH₂CH₂NR²CH₂CH₂NR³CH₂CH₂CH₂NHR⁴

wobei R¹, R² und eines von R³ und R⁴ eine s-Triazineinheit, ausgedrückt durch die folgende allgemeine Formel, sind: 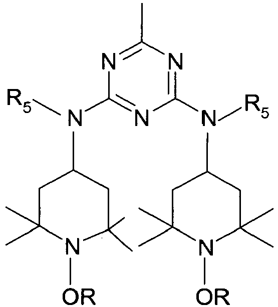 das andere von R³ und R⁴ ein Wasserstoffatom ist, und in der allgemeinen Formel R⁵ ein Alkylrest mit 1 bis 12 Kohlenstoffatomen ist und R eine Methylgruppe, eine Cyclohexylgruppe oder eine Octylgruppe ist. Diese Verbindung wird unter dem Markennamen FLAMESTAB NOR 116^{™} von der BASF SE, vertrieben. Die Herstellung dieser Verbindung ist in der EP 0 889 085 offenbart, deren Offenbarung durch Bezugnahme in der vorliegenden Anmeldung enthalten ist.

Die genannten NOR-HALS-Verbindungen sind teilweise kommerziell erhältliche Produkte und werden unter den folgenden Markennamen gehandelt: FLAMESTAB NOR 116^{™}, TINUVIN NOR 371^{™}, IRGATEC CR 76^{™} von der BASF SE, Hostavin NOW^{™} von Clariant oder ADK Stab LA 81^{™} von Adeka.

Im Rahmen der vorliegenden Erfindung hat es sich herausgestellt, dass durch die Anwesenheit dieser weiteren Komponente (c2) die Wirksamkeit der erfindungsgemäßen Zusammensetzung, enthaltend die Komponenten (A) und (B), noch weiter in überraschendem Maße verbessert wird, so dass die erforderlichen Einsatzmengen der Komponenten (A), (B) und (c2) noch weiter herabgesetzt werden können.

Gemäß einer weiteren bevorzugten Ausführungsform der Erfindung handelt es sich bei der Komponente (C) um eine oder mehrere Verbindung(en), ausgewählt aus der Gruppe (c3) der Oxyimide. Bei den Oxyimiden, der Komponente (c3) gemäß der vorliegenden Erfindung handelt es sich um Verbindungen, die wenigstens ein Strukturelement gemäß der nachfolgend abgebildeten Formel enthalten:

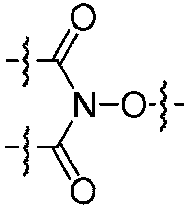

Derartige Verbindungen sind beispielsweise in der WO2014/154636 beschrieben, deren Offenbarung durch Bezugnahme in der vorliegenden Anmeldung enthalten ist.

Die Erfindung betrifft somit gemäß dieser bevorzugten Ausführungsform eine flammhemmende Zusammensetzung, enthaltend eine Mischung der Komponenten (A), (B) und (C) mit den nachfolgenden Bedeutungen:
(A) ist wenigstens eine Phosphonatverbindung gemäß der allgemeinen Formel 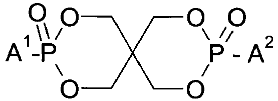 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, darstellen,
(B) ist wenigstens eine Verbindung oder ein Gemisch von zwei oder mehreren Verbindungen, ausgewählt aus der Gruppe bestehend aus Zinksulfid, Polyphenylensulfid, Zinkhydroxystannat und Zinkstannat und
(C) ist wenigstens ein Oxyimid.

Gemäß einer besonders bevorzugten Ausführungsform der Erfindung handelt es sich bei der Komponente (c3) um den O,O' -Terephthaloyl-bis-N,N'-phthalimidester:

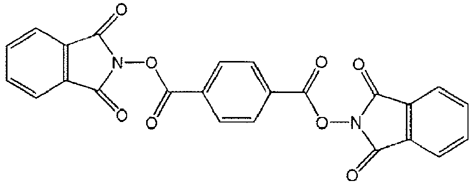

Dieser kann, wie in Beispiel 4 der WO2014/154636 A1 beschrieben, hergestellt werden.

Im Rahmen der vorliegenden Erfindung hat es sich herausgestellt, dass durch die Anwesenheit dieser weiteren Komponente (c3) die Wirksamkeit der erfindungsgemäßen Zusammensetzung, enthaltend die Komponenten (A) und (B), noch weiter in überraschendem Maße verbessert wird, so dass die erforderlichen Einsatzmengen der Komponenten (A), (B) und (c3) noch weiter herabgesetzt werden können.

Gemäß einer bevorzugten Ausführungsform der Erfindung handelt es sich bei der Komponente (C) um eine oder mehrere Verbindung(en), ausgewählt aus der Gruppe (c4), bestehend aus Sulfenamiden. Bei dem Sulfenamid, der Komponente (c4) gemäß der vorliegenden Erfindung, handelt es sich um Verbindungen, die wenigstens ein Strukturelement gemäß der nachfolgend abgebildeten Formel enthalten:

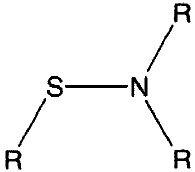

Derartige Verbindungen sind beispielsweise in der WO2015/067736 A1 beschrieben, deren Offenbarung durch Bezugnahme in der vorliegenden Anmeldung enthalten ist.

Die Erfindung betrifft somit gemäß dieser bevorzugten Ausführungsform eine flammhemmende Zusammensetzung, enthaltend eine Mischung der Komponenten (A), (B) und (C) mit den nachfolgenden Bedeutungen:
(A) ist wenigstens eine Phosphonatverbindung gemäß der allgemeinen Formel 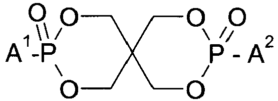 worin A¹ und A² unabhängig voneinander eine substituierte oder nicht substituierte geradkettige oder verzweigte Alkylgruppe mit 1 bis 4 Kohlenstoffatomen, substituiertes oder nicht substituiertes Benzyl, substituiertes oder nicht substituiertes Phenyl, darstellen,
(B) ist wenigstens eine Verbindung oder ein Gemisch von zwei oder mehreren Verbindungen, ausgewählt aus der Gruppe bestehend aus Zinksulfid, Polyphenylensulfid, Zinkhydroxystannat und Zinkstannat und
(C) ist wenigstens ein Sulfenamid.

Gemäß einer besonders bevorzugten Ausführungsform der Erfindung handelt es sich bei der Komponente (c4) um das Bis(2,2,6,6-Tetramethyl-1-(phenylthio)piperidin-4-yl)dekandioat:

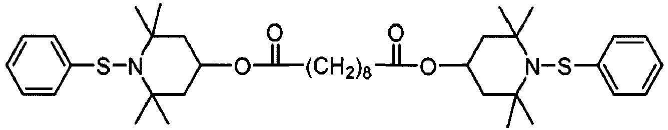

Dieses kann, wie in Beispiel 33 der WO2015/067736 A1 beschrieben, hergestellt werden.

Im Rahmen der vorliegenden Erfindung hat es sich herausgestellt, dass durch die Anwesenheit dieser weiteren Komponente (c4) die Wirksamkeit der erfindungsgemäßen Zusammensetzung, enthaltend die Komponenten (A) und (B), noch weiter in überraschendem Maße verbessert wird, so dass die erforderlichen Einsatzmengen der Komponenten (A), (B) und (c4) noch weiter herabgesetzt werden können.

Der Anteil dieser Komponente (C), bezogen auf die Summe aller Komponenten der Flammschutzmittelzusammensetzung liegt allgemein im Bereich von 2 bis 30 Gew.-%, bevorzugt im Bereich von 5 bis 25 Gew.-%, besonders bevorzugt im Bereich von 10 bis 20 Gew.-%.

Die Polymere bzw. Polymerzusammensetzungen, oder die flammhemmende Zusammensetzung gemäß der vorliegenden Erfindung, können weiterhin zusätzlich Additive enthalten. Diese zusätzlichen Additive sind beispielsweise aus der Gruppe der Wärmestabilisatoren und/oder Lichtstabilisatoren ausgewählt. Die thermische Stabilisierung umfasst dabei sowohl das Verarbeiten als auch die Anwendung (Langzeitstabilität). Derartige Additive sind dem Fachmann bekannt und kommerziell erhältlich.

Die vorliegende Erfindung betrifft ferner die Verwendung der erfindungsgemäßen flammhemmenden Zusammensetzung, enthaltend die Komponenten (A), (B) und (C) zur flammhemmenden Ausrüstung von Polymeren bzw. Polymerblends. Das Polymer bzw. das Polymersubstrat kann dabei ein beliebiges aus einer großen Vielzahl von Polymerarten einschließlich Polyolefinen, Polyestern, Polyamiden, ABS-Polymeren sein. Besonders bevorzugt sind die Polymere Polypropylen, Polyethylen, thermoplastisches Olefin (TPO), ABS sowie schlagfestes Polystyrol; insbesondere bevorzugt sind Polypropylen, Polyethylen und thermoplastisches Olfein (TPO), thermoplastische Polyurethan-Elastomere (TPU), Polyvinylchlorid (PVC), Polyvinylacetat (PVA), Ethyl-Vinylacetat (EVA), Polyesterharze (UP-Harze), Polyharnstoffe und Polyurethane.

Die wirksame flammverzögernde Menge der erfindungsgemäßen flammhemmenden Zusammensetzung ist jene, die benötigt wird, um eine flammverzögernde Wirksamkeit zu zeigen, wird durch eines der Standardverfahren gemessen, die zum Bewerten von Flammverzögerung verwendet werden. Diese schließen die NFPA 701-Standardverfahren zur Brandprüfung für flammwidrige Textilien und Folien 1989 und 1996er Ausgabe; den Elektro-UL 94-Test für die Entflammbarkeit von Kunststoffmaterialien für Teile in Vorrichtungen und Geräten, 5. Ausgabe, 29. Oktober 1996, begrenzender Sauerstoffindex, Limiting Oxygen Index (LOI), ASTM-D2863 und Cohen Calorimetry ASTM E-1354 ein. Ferner können die Normen für Gebäude (DIN4102B1) und für Kraftfahrzeuge (MVSS 302) zur Untersuchung der flammhemmenden Eigenschaften der erfindungsgemäßen flammhemmenden Zusammensetzung angewandt werden.

Die vorliegende Erfindung betrifft somit auch eine flammhemmende Zusammensetzung, die umfasst:
(a) ein Polymer sowie
(b) eine wirksame flammhemmende Menge der erfindungsgemäßen flammhemmenden Zusammensetzung, enthaltend die Komponenten (A), (B) und (C).

Die wirksame flammhemmende Menge der erfindungsgemäßen flammhemmenden Zusammensetzung beträgt zweckdienlicherweise 0,1 bis 30 Gew.-%, bevorzugt 0,5 bis 20 Gew.-%, besonders bevorzugt 1 bis 10 Gew.-%, bezogen auf das Polymer.

Die die erfindungsgemäßen flammhemmenden Zusammensetzungen enthaltenden flammhemmenden Polymere können durch bekannte Verfahren, zum Beispiel durch Vermischen der angeführten Additive und wahlweise weiteren Additive mit dem Polymer unter Verwendung von Ausrüstungen, wie Kallander, Mischer, Kneter, Extruder und dergleichen hergestellt werden. Die Additive können einzeln oder in Anmischungen miteinander zugesetzt werden. Es ist auch möglich, sogenannte Masterbatche zu verwenden. In solchen Vorgängen kann beispielsweise das Polymer in Form von Pulvern, Granulaten, Lösungen, Suspensionen oder in Form von Latices verwendet werden. Die somit erhaltenen flammhemmend ausgerüsteten Polymerzusammensetzungen können durch bekannte Verfahren in die gewünschte Form gebracht werden. Solche Verfahren sind zum Beispiel Kallandrieren, Extrudieren, Spritzguss, Sprühbeschichten, Rakelbeschichten, Spinnen, Kompressionsschmelzen, Rotationsgießen, Thermoformen oder Extrusionsblasen. Das fertige flammhemmend ausgerüstete Polymer kann auch zu geschäumten Gegenständen verarbeitet werden.

Die hiermit hergestellten Polymergegenstände sind beispielsweise Fasern, Filme bzw. Folien, Formgegenstände und geschäumte Formkörper.

Die erfindungsgemäßen Additive und wahlweise weitere Komponenten können zu dem Polymermaterial einzeln, oder vermischt miteinander, zugegeben werden. Falls erwünscht, können die einzelnen Komponenten vor der Einarbeitung in das Polymer, zum Beispiel durch Trockenvermischen, Verdichtung, oder in der Schmelze miteinander vermischt werden.

Gemäß einer weiteren Ausführungsform betrifft die Erfindung ein Verfahren, um einem Polymer flammhemmende Eigenschaften zu verleihen, wobei das Verfahren die Zugabe der Komponenten (A), (B) und (C) zu dem Polymer umfasst. Die wirksame flammhemmende Menge der Komponenten (A), (B) und (C) ist dabei diejenige, die benötigt wird, um flammhemmende Wirksamkeit nachzuweisen, wie mit Hilfe eines der vorstehend beschriebenen Standardverfahren gemessen werden kann. Die nachstehenden Beispiele sind nur für Erläuterungszwecke vorgesehen, und nicht um den Umfang der Erfindung in irgendeiner Weise zu begrenzen. Wenn nicht anders angegeben, bedeutet Raumtemperatur eine Temperatur im Bereich von 20 bis 25 °C. Prozentsätze sind auf das Gewicht des Polymersubstrats bezogen, sofern nicht anders angegeben.

### Die nachstehenden Beispiele verdeutlichen die Erfindung.

Zur Veranschaulichung der Erfindung werden Polypropylenstäbe hergestellt, die mit unterschiedlichen flammhemmenden Zusammensetzungen versetzt waren:

### 1. Herstellung der Polypropylenstäbe:

Eine genaue Menge an Polypropylen (Moplen HP500N; Melt Flow Index 12 g bei 230°C und einem Gewicht von 2,16 kg) und der entsprechenden flammhemmenden Zusammensetzung gemäß den jeweiligen Beispielen, werden bei 200°C auf einem Brabender ZSK 20/40 mit einer Schneckendrehzahl von 40 U/min zu 1,6mm dicken Prüfstäben extrudiert.

Dabei wurden die flammhemmenden Zusammensetzungen zuvor in einem Labormischer homogen verrührt und über einen side feed in die Polymerschmelze dosiert. Nach dem Abkühlen der Prüfstäbe, werden diese auf eine Länge von 125 mm geschnitten, so dass das Gesamtmaß der Prüfstäbe 125 × 13 × 1,6 mm beträgt. Es werden jeweils 2 × 5 Prüfstäbe pro Rezeptur hergestellt. Nach der Herstellung wurden die Prüfstäbe 48 Stunden bei 23°C und 50 % rel. Feuchte gelagert.

### 2. Beurteilung der Wirksamkeit:

Um die Wirkung der jeweiligen flammhemmenden Zusammensetzung zu überprüfen, werden die gemäß 1. hergestellten Prüfstäben einer Brennprüfung nach UL 94 unterworfen.

### 3. Synergistische Wechselwirkung der Komponenten (A) und (B) (Vergleichsbeispiele)

Aus den nachfolgend in Tabelle 1 angegebenen Versuchsergebnissen zeigt sich deutlich ein synergistischer Effekt bei der Kombination der Komponenten (A) und (B), der so nicht zu erwarten war. Während die Einzelkomponenten bei einer Einsatzmenge von 7 Gew.-% nach ihrer Brandschutzwirkung UL-94 nicht klassifizierbar waren (n.k.) führte der Kombinierte Einsatz der Komponenten (A) und (B) in einer Gesamtmenge von 7 Gew.-% bereits zum Erreichen der UL-94-Klasse V2.

**Tabelle 1:**

| **Bsp.:** | **PP-12** | **(A) PCO 900** | **(B) ZS** | **(B) ZnS** | **(B) PPS** | **UL-94 (NBZ)** | **UL-94-Klasse** |
|---|---|---|---|---|---|---|---|
| V1 | 100 | - | - | - | - | >60 | n.k |
| V2 | 93 | 7 | - | - | - | >60 | n.k |
| v1 | 93 | 5 | 2 | - | - | 13 | V2 |
| v2 | 93 | 6,2 | 0,8 | - | - | 24 | V2 |
| v3 | 93 | 3,5 | 3,5 | - | - | 29 | V2 |
| v4 | 93 | 5 | - | 2 | - | 10 | V2 |
| v5 | 93 | 6,2 | - | 0,8 | - | 21 | V2 |
| v6 | 93 | 3,5 | - | 3,5 | - | 34 | V2 |
| v7 | 93 | 5 | - | - | 2 | 8 | V2 |
| v8 | 93 | 6,2 | - | - | 0,8 | 27 | V2 |
| v9 | 93 | 3,5 | | - | 3,5 | 31 | V2 |
| V4 | 93 | - | 7 | - | - | >60 | n.k. |
| V5 | 93 | - | - | 7 | - | >60 | n.k. |
| V6 | 93 | - | - | - | 7 | >60 | n.k. |

| | | | | | | | |
|---|---|---|---|---|---|---|---|
| V: Vergleichsbeispiele; NBZ: Nachbrennzeit [sec]; Alle Angaben in der Tabelle in Gew.-%; PP-12: Moplen HP500N; Melt Flow Index 12 g, 230°C/2,16 kg; PC0900: AFLAMMIT PCO 900 (THOR GmbH); ZnS: Zinksulfid; PPS: Polyphenylensulfid; ZS: Zinkstannat. | | | | | | | |

Tabelle 1 zeigt, dass die Zusammensetzung (Vergleichsbeispiele v1, v2 und v3), enthaltend die Komponenten (A) und (B) hinsichtlich der Flammwidrigkeit (UL94) gegenüber dem Stand der Technik eine drastische Verbesserung darstellt, die über die erwartete Wirkung der beiden Einzelkomponenten deutlich hinausgeht. Das Gewichtsverhältnis, innerhalb dessen die Komponenten (A) und (B) synergistisch interagieren, liegt im Bereich von 9:1 bis 1:1.

### 2. Synergistische Wechselwirkung der Komponenten (A), (B) und (C)

Aus den nachfolgend in Tabelle 2 angegebenen Versuchsergebnissen zeigt sich deutlich ein synergistischer Effekt bei der Kombination der Komponenten (A), (B) und (C).

Während die Einzelkomponenten bzw. Zweikomponentengemische in ihrer Brandschutzwirkung nach UL-94 nicht klassifizierbar waren (n.k.) bzw. in die UL-94-Klasse V2 eingeordnet waren, zeigte sich, dass bei einer Kombination aus den Komponenten (A), (B) und (C) bei gleicher Einsatzkonzentration sogar eine Einstufung von UL-94 V0 erreicht werden kann (siehe Beispiele 1 bis 8).

**Tabelle 2:**

| **Bsp.:** | **PP-12** | **(A) PCO 900** | **(B) ZnS** | **(B) PPS** | **(B) ZS** | **(c1) DC** | **(c2) NOR 116** | **(c3) RB1** | **(c4) RB2** | **UL-94 (NBZ)** | **UL-94-Klasse** |
|---|---|---|---|---|---|---|---|---|---|---|---|
| V1 | 100 | - | - | - | - | - | | | | >60 | n.k |
| V2 | 95 | 5,0 | - | - | - | - | - | - | | >60 | n.k |
| V3 | 93 | 7,0 | | | | | | | | >60 | n.k |
| V4 | 93 | 5,0 | | - | - | 2 | | | | 19 | V2 |
| V5 | 93 | 5,0 | | | | | 2 | | | 5 | V2 |
| V6 | 93 | 5,0 | | | | | | 2 | | 18 | V2 |
| V7 | 93 | 5,0 | | | | | | | 2 | 13 | V2 |
| 1 | 93 | 4,5 | 2 | | | | 0,5 | | | 1 | V0 |
| 2 | 93 | 4,5 | | 2 | | | 0,5 | | | 0 | V0 |
| 3 | 93 | 4,5 | | | 2 | | 0,5 | | | 0 | V0 |
| 4 | 93 | 4,5 | 2 | | | 0,5 | | | | 3 | V0 |
| 5 | 93 | 4,5 | 2 | | | | | 0,5 | | 2 | V0 |
| 6 | 93 | 4,5 | 2 | | | | | | 0,5 | 0 | V0 |
| 7 | 93 | 4,5 | | 2 | | | | 0,5 | | 2 | V0 |
| 8 | 93 | 4,5 | | | 2 | | | | 0,5 | 0 | V0 |
| V8 | 93 | - | | | | 7 | | | | >60 | n.k. |
| V9 | 93 | - | | | | | 7 | | | >60 | n.k. |
| V10 | 93 | - | | | | | | 7 | | >60 | n.k. |
| V11 | 93 | - | | | | | | | 7 | >60 | n.k. |

| | | | | | | | | | | | |
|---|---|---|---|---|---|---|---|---|---|---|---|
| V: Vergleichsbeispiele; NBZ: Nachbrennzeit [sec]; Alle Angaben in der Tabelle in Gew.-%; PP-12: Moplen HP500N; Melt Flow Index 12 g, 230°C/2,16 kg; PC0900: AFLAMMIT PCO 900 (THOR GmbH); ZnS: Zinksulfid; PPS: Polyphenylensulfid; ZS: Zinkstannat; DC: Dicumen, NOR 116: FLAMESTAB NOR 116von der BASF SE; RB1: O,O' -Terephthaloyl-bis-N,N'-phthalimidester, RB2: Bis(2,2,6,6-Tetramethyl-1-(phenylthio)piperidin-4-yl)dekandioat. | | | | | | | | | | | |

Tabelle 2 zeigt, dass die erfindungsgemäße Zusammensetzung (Beispiele 1 bis 8), enthaltend die Komponenten (A), (B) und (C), hinsichtlich der Flammwidrigkeit nach UL94 über die erwartete Wirkung der Einzelkomponenten deutlich hinausgeht.

## Patentansprüche

1. Zusammensetzung, enthaltend eine Mischung der Komponenten (A), (B) und (C) mit den nachfolgenden Bedeutungen:
(A) ist wenigstens eine Phosphonatverbindung gemäß der allgemeinen Formel 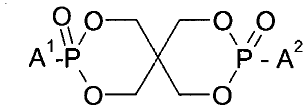 worin A¹ und A² unabhängig voneinander eine substituierte, oder nicht substituierte, geradkettige oder verzweigte Alkylgruppe mit 1 bis 4 Kohlenstoffatomen, substituiertes, oder nicht substituiertes Benzyl, substituiertes oder nicht substituiertes Phenyl, darstellen,
(B) ist wenigstens eine Verbindung, oder ein Gemisch von zwei oder mehreren Verbindungen, ausgewählt aus der Gruppe bestehend aus Zinksulfid, Polyphenylensulfid, Zinkhydroxystannat und Zinkstannat, und
(C) ist wenigstens eine Verbindung oder ein Gemisch von zwei oder mehreren Verbindungen, ausgewählt aus der Gruppe bestehend aus:
(c1) Dicumyl(2,3-Dimethyl-2,3-diphenylbutan), Dicumylperoxid und Polycumyl-1,4, Polycumyl-1,3,
(c2) einer NOR-HALS-Verbindung,
(c3) einer organischen Oxyimind-Verbindung, und
(c4) einem Sulfenamid.

2. Zusammensetzung nach Anspruch 1, **dadurch gekennzeichnet, dass** die Phosphonatverbindung, Komponente (A), eine Verbindung der nachfolgenden Formel 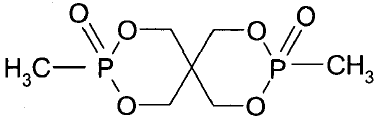 ist.

3. Zusammensetzung nach Anspruch 1 oder 2, **dadurch gekennzeichnet, dass** die Zusammensetzung die Komponente (A) in einer Menge von 50 bis 90 Gew.-%, bezogen auf die Zusammensetzung, enthält.

4. Zusammensetzung nach einem der Ansprüche 1 bis 3, **dadurch gekennzeichnet, dass** die Zusammensetzung die Komponente (B) in einer Menge von 10 bis 50 Gew.-%, bezogen auf die Zusammensetzung, enthält.

5. Zusammensetzung nach einem der Ansprüche 1 bis 4, **dadurch gekennzeichnet, dass** die Komponenten (A) und (B) in einem Gewichtsverhältnis 9:1 bis 1:1 zueinander vorliegen.

6. Zusammensetzung nach einem der Ansprüche 1 bis 5, **dadurch gekennzeichnet, dass** die Zusammensetzung die Komponente (C) in einer Menge von 2 bis 30 Gew.-%, bezogen auf die Zusammensetzung, enthält.

7. Zusammensetzung nach einem der Ansprüche 1 bis 6, enthaltend als Komponente (C) eine NOR-HALS-Verbindung, ausgedrückt durch die folgende allgemeine Formel:
R¹NHCH₂CH₂CH₂NR²CH₂CH₂NR³CH₂CH₂CH₂NHR⁴
wobei R¹, R² und eines von R³ und R⁴ eine s-Triazineinheit, ausgedrückt durch die folgende allgemeine Formel, sind: 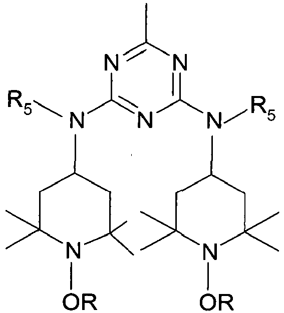 das andere von R³ und R⁴ ein Wasserstoffatom ist und in der allgemeinen Formel R⁵ ein Alkylrest mit 1 bis 12 Kohlenstoffatomen ist und R eine Methylgruppe, eine Cyclohexylgruppe, oder eine Octylgruppe ist.

8. Zusammensetzung nach Anspruch 5 oder 6, enthaltend als Komponente (C) wenigstens Bis(2,2,6,6-Tetramethyl-1-(phenylthio)piperidin-4-yl)dekandioat und/oder O,O' -Terephthaloyl-bis-N,N'-phthalimidester.

9. Verwendung der Zusammensetzung nach einem der Ansprüche 1 bis 8 zur flammhemmenden Ausrüstung von Polymeren.

10. Verwendung nach Anspruch 9, wobei die Polymere ausgewählt sind aus Polyolefinen, Polyestern, Polyamiden und ABS-Polymeren.

11. Verwendung nach Anspruch 9 oder 10, wobei die Komponenten (A), (B) und (C) unabhängig voneinander jeweils in einer Konzentration von 0,5 bis 20 Gew.-%, bezogen auf das Polymer, eingesetzt werden.

12. Polymer, enthaltend eine Zusammensetzung gemäß einem der Ansprüche 1 bis 8.

13. Polymer gemäß Anspruch 12, ausgewählt aus Polyolefinen, Polyestern, Polyamiden, ABS-Polymeren, Polypropylen, Polyethylen, thermoplastischem Olefin (TPO), schlagfestem Polystyrol, Polypropylen, Polyethylen, thermoplastischen Polyurethan-Elastomeren (TPU), Polyvinylchlorid (PVC), Polyvinylacetat (PVA), Ethyl-Vinylacetat (EVA), Polyesterharzen (UP-Harze), Polyharnstoffen und Polyurethanen, oder Mischungen zweier oder mehrerer.

## Claims

1. Composition containing a mixture of the components (A), (B) and (C) having the following meanings:
(A) is at least one phosphonate compound of the general formula 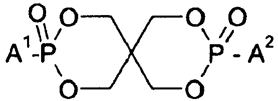 where A¹ and A² are each, independently of one another, a substituted or unsubstituted, straight-chain or branched alkyl group having from 1 to 4 carbon atoms, substituted or unsubstituted benzyl, substituted or unsubstituted phenyl,
(B) is at least one compound or a mixture of two or more compounds selected from the group consisting of zinc sulfide, polyphenylene sulfide, zinc hydroxystannate and zinc stannate, and
(C) is at least one compound or a mixture of two or more compounds selected from the group consisting of:
(c1) bicumyl (2,3-dimethyl-2,3-diphenylbutane), dicumyl peroxide and 1,4-polycumyl 1,3-polycumyl,
(c2) an NOR-HALS compound,
(c3) an organic oxyimide compound, and
(c4) a sulfenamide.

2. Composition according to Claim 1, **characterized in that** the phosphonate compound, component (A), is a compound having the following formula

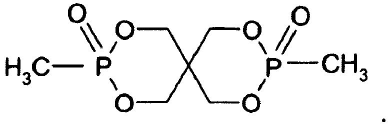

3. Composition according to Claim 1 or 2, **characterized in that** the composition contains the component (A) in an amount of from 50 to 90% by weight, based on the composition.

4. Composition according to any of Claims 1 to 3, **characterized in that** the composition contains the component (B) in an amount of from 10 to 50% by weight, based on the composition.

5. Composition according to any of Claims 1 to 4, **characterized in that** the components (A) and (B) are present in a weight ratio of from 9:1 to 1:1.

6. Composition according to any of Claims 1 to 5, **characterized in that** the composition contains the component (C) in an amount of from 2 to 30% by weight, based on the composition.

7. Composition according to any of Claims 1 to 6 containing, as component (C), an NOR-HALS compound having the following general formula:
R¹NHCH₂CH₂CH₂NR²CH₂CH₂NR³CH₂CH₂CH₂NHR⁴
where R¹, R² and one of R³ and R⁴ are an s-triazine unit having the following general formula: 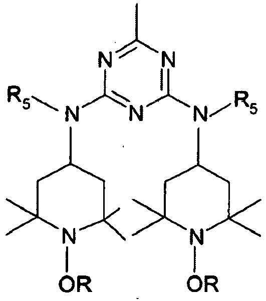 and the other of R³ and R⁴ is a hydrogen atom and R⁵ in the general formula is an alkyl radical having from 1 to 12 carbon atoms and R in the general formula is a methyl group, a cyclohexyl group or an octyl group.

8. Composition according to Claim 5 or 6 containing, as component (C), at least bis(2,2,6,6-tetramethyl-1-(phenylthio)piperidin-4-yl)decanedioate and/or O,O'-terephthaloyl bis-N,N'-phthalimide ester.

9. Use of the composition according to any of Claims 1 to 8 for flame-retardant treatment of polymers.

10. Use according to Claim 9, wherein the polymers are selected from among polyolefins, polyesters, polyamides and ABS polymers.

11. Use according to Claim 9 or 10, wherein the components (A), (B) and (C) are each used, independently of one another, in a concentration of from 0.5 to 20% by weight, based on the polymer.

12. Polymer containing a composition according to any of Claims 1 to 8.

13. Polymer according to Claim 12 selected from among polyolefins, polyesters, polyamides, ABS polymers, polypropylene, polyethylene, thermoplastic olefin (TPO), impact-modified polystyrene, polypropylene, polyethylene, thermoplastic polyurethane elastomers (TPU), polyvinyl chloride (PVC), polyvinyl acetate (PVA), ethylene-vinyl acetate (EVA), polyester resins (UP resins), polyureas and polyurethanes and mixtures of two or more thereof.

## Revendications

1. Composition, contenant un mélange des composants (A), (B) et (C) dotés des significations suivantes :
(A) étant au moins un composé de type phosphonate selon la formule générale 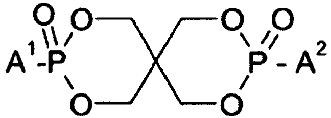 dans laquelle A¹ et A² représentent indépendamment l'un de l'autre un groupe alkyle substitué, ou non substitué, linéaire ou ramifié comportant 1 à 4 atomes de carbone, benzyle substitué ou non substitué, phényle substitué ou non substitué,
(B) étant au moins un composé, ou un mélange de deux composés ou plus choisis dans le groupe constitué par le sulfure de zinc, un poly(sulfure de phénylène), l'hydroxystannate de zinc et le stannate de zinc, et
(C) étant au moins un composé, ou un mélange de deux composés ou plus choisis dans le groupe constitué par :
(c1) dicumyl(2,3-diméthyl-2,3-diphénylbutane), peroxyde de dicumyle et polycumyl-1,4, polycumyl-1,3,
(c2) un composé NOR-HALS,
(c3) un composé de type oxyimine organique, et
(c4) un sulfénamide.

2. Composition selon la revendication 1, **caractérisée en ce que** le composant de type phosphonate, composant (A), est un composé de la formule suivante

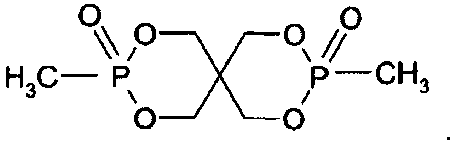

3. Composition selon la revendication 1 ou 2, **caractérisée en ce que** la composition contient le composant (A) en une quantité de 50 à 90 % en poids, par rapport à la composition.

4. Composition selon l'une quelconque des revendication 1 à 3, **caractérisée en ce que** la composition contient le composant (B) en une quantité de 10 à 50 % en poids, par rapport à la composition.

5. Composition selon l'une quelconque des revendication 1 à 4, **caractérisée en ce que** les composants (A) et (B) sont présents en un rapport en poids l'un par rapport à l'autre de 9 : 1 à 1 : 1.

6. Composition selon l'une quelconque des revendication 1 à 5, **caractérisée en ce que** la composition contient le composant (C) en une quantité de 2 à 30 % en poids, par rapport à la composition.

7. Composition selon l'une quelconque des revendication 1 à 6, contenant en tant que composant (C) un composé NOR-HALS, exprimé par la formule générale suivante :
**R¹NHCH₂CH₂CH₂NR²CH₂CH₂NR³CH₂CH₂CH₂NHR⁴**
R¹, R² et l'un parmi R³ et R⁴ étant un motif de type s-triazine, exprimé par la formule générale suivante 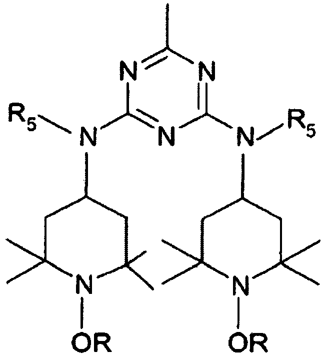 l'autre parmi R³ et R⁴ étant un atome d'hydrogène et dans la formule générale R⁵ étant un radical alkyle comportant 1 à 12 atomes de carbone et R étant un groupe méthyle, un groupe cyclohexyle ou un groupe octyle.

8. Composition selon la revendication 5 ou 6, contenant en tant que composant (C) au moins le bis(2,2,6,6-tétraméthyl-1-(phénylthio)pipéridin-4-yl)décanedioate et/ou l'ester de bis-N,N'-phthalimide de O,O'-téréphthaloyle.

9. Utilisation de la composition selon l'une quelconque des revendications 1 à 8 pour l'ignifugation de polymères.

10. Utilisation selon la revendication 9, les polymères étant choisis parmi des polyoléfines, des polyesters, des polyamides et des polymères de type ABS.

11. Utilisation selon la revendication 9 ou 10, les composants (A), (B) et (C) indépendamment les uns des autres étant utilisés à chaque fois en une concentration de 0,5 à 20 % en poids, par rapport au polymère.

12. Polymères, contenant une composition selon l'une quelconque des revendications 1 à 8.

13. Polymère selon la revendication 12, choisi parmi des polyoléfines, des polyesters, des polyamides, des polymères de type ABS, un polypropylène, un polyéthylène, une oléfine thermoplastique (TPO), un polystyrène résistant aux chocs, un polypropylène, un polyéthylène, des élastomères de polyuréthane thermoplastiques (TPU), un poly(chlorure de vinyle) (PVC), un poly(acétate de vinyle) (PVA), un éthyl-acétate de vinyle (EVA), des résines de polyesters (résines UP), des polyurées et des polyuréthanes, ou des mélanges de deux ou plus de ceux-ci.
